(19) Europäisches Patentamt
European Patent Office
Office européen des brevets

(11) **EP 3 381 870 B1**

(12) **EUROPÄISCHE PATENTSCHRIFT**

(45) Veröffentlichungstag und Bekanntmachung des Hinweises auf die Patenterteilung:
**23.12.2020   Patentblatt 2020/52**

(51) Int Cl.:
***C03B 19/06*** *(2006.01)*

(21) Anmeldenummer: **17163811.7**

(22) Anmeldetag: **30.03.2017**

(54) **VERFAHREN ZUR HERSTELLUNG EINES BAUTEILS AUS SELTENERDMETALLDOTIERTEM QUARZGLAS**

METHOD FOR PRODUCING A COMPONENT MADE OF RARE EARTH DOPED QUARTZ GLASS

PROCÉDÉ DE FABRICATION D'UN COMPOSANT EN VERRE DE QUARTZ DOPÉ D'UNE TERRE RARE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.10.2018   Patentblatt 2018/40**

(73) Patentinhaber: **Heraeus Quarzglas GmbH & Co. KG**
**63450 Hanau (DE)**

(72) Erfinder:
• **LEHMANN, Walter**
**04155 Leipzig (DE)**
• **SUCH, Mario**
**06792 Sandersdorf-Brehna (DE)**
• **KAYSER, Thomas**
**04105 Leipzig (DE)**
• **LANGNER, Andreas**
**63579 Freigericht (DE)**
• **SCHÖTZ, Gerhard**
**63741 Aschaffenburg (DE)**

(74) Vertreter: **Staudt, Armin Walter**
**Sandeldamm 24a**
**63450 Hanau (DE)**

(56) Entgegenhaltungen:
EP-A1- 2 703 367         DE-A1-102004 006 017
DE-A1-102007 045 097     GB-A- 2 331 985
JP-A- 2002 356 340

EP 3 381 870 B1

**Beschreibung**

Technischer Hintergrund

Die Erfindung betrifft ein Verfahren zur Herstellung eines Bauteils, das mindestens bereichsweise aus seltenerdmetalldotiertem Quarzglas besteht, umfassend die Verfahrensschritte:

(a) Bereitstellen eines Hohlräume enthaltenden Zwischenprodukts aus einem mit Seltenerdmetall dotierten $SiO_2$-Rohstoff,

(b) Einbringen des Zwischenprodukts in eine Sinterform mit einem Innenraum, der von einer kohlenstoffhaltigen Formwandung begrenzt ist,

(c) Schmelzen des Zwischenprodukts zu dem Bauteil durch Gasdrucksintern bei einer Maximal-Temperatur oberhalb von 1500 °C, wobei zwischen der Formwandung und dem Zwischenprodukt eine Abschirmung angeordnet ist.

Zu den Seltenerdmetallen gehören die Elemente Scandium, Yttrium und Lanthan und die Lanthanoide. Mit Seltenerdmetallen dotiertes Quarzglas wird beispielsweise für die Herstellung von Armaturen und Bauteilen für die Halbleiterfertigung oder von Faserverstärkern oder Faserlasern in der Lasertechnologie verwendet. Im erstgenannten Einsatzgebiet bewirken die Dotierstoffe einer Verbesserung der Trockenätzbeständigkeit des Glaswerkstoffs, und im zweitgenannten Einsatzgebiet die Generierung der Verstärkung von Laserstrahlung im Wirtsmaterial Quarzglas.

Stand der Technik

Die DE 10 2004 006 017 A1 beschreibt die Herstellung eines mit der Seltenerd- oder Übergangsmetallen dotierten, laseraktiven Quarzglases über eine "Pulver-Route". Dabei wird von einem wässrigen Schlicker ausgegangen, der mittels Fällungsreaktion erzeugte, nanoskalige $SiO_2$-Partikel sowie Ausgangsverbindungen für die Dotierstoffe in Form wasserlöslicher Hydratverbindungen enthält. Nach der Granulierung wird das noch poröse dotierte $SiO_2$-Granulat in eine Grafitform gegeben und durch Gasdrucksintern verglast. Die Grafitform wird zunächst unter Aufrechterhaltung eines Unterdrucks auf eine Sintertemperatur von 1600 °C aufgeheizt. Nach Erreichen dieser Temperatur wird im Ofen ein Überdruck von 5 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrechterhalten.
Ein ähnlicher Vorschlag ergibt sich auch aus der DE 10 2006 043 738 A1 für das Sintern eines mit Seltenerdmetall und mit Stickstoff dotierten Quarzglases für den Einsatz in der Halbleiterfertigung. Ein trockenes Pulvergemisch aus oxidischen Ausgangssubstanzen wird in einer hohlzylindrischen Grafitform unter Vakuum bei einer Temperatur von 1550 °C während einer Dauer von 2,5 h gesintert, anschließend auf eine Temperatur von 1700 °C aufgeheizt und dabei zu einem Block aus transparentem Quarzglas verglast. Das Verglasen erfolgt zunächst ebenfalls bei niedrigem Druck und danach zwecks Stickstoff-Dotierung unter einer Stickstoff-Atmosphäre bei einem Druck von 12 bar.
Durch den Einsatz der Grafitform bei diesen Verfahrensweisen stellt sich eine reduzierend wirkende Sinter-Atmosphäre ein, infolge derer es zu chemischen Reaktionen zwischen dem dotierten Granulat und der Grafitform kommen kann. Dadurch können im fertigen Quarzglasbauteil Substanzen in einem unterstöchiometrischen oder reduzierten Oxidationszustand vorliegen und zu unerwünschten Absorptionen und Verfärbungen des dotierten Quarzglases kommen. Außerdem können bei der Reaktion gasförmige Reaktionsprodukte entstehen, die zur Blasenbildung im Quarzglas-Bauteil beitragen.
Um diese Effekte abzumildern und Blasenentstehung zu reduzieren wird die Sintertemperatur möglichst niedrig gehalten. Dennoch werden im gesinterten Körper häufig Glasfehler beobachtet, bei denen es sich auch um Entglasungen durch Bildung von Cristobalitkristallen handeln kann.
Eine Verminderung des reduzierend wirkenden Einflusses der Grafitform auf die Sinter-Atmosphäre ergibt sich bei einem gattungsgemäßen Herstellungsverfahren für ein Bauteil aus laseraktivem Quarzglas, wie es aus der DE 10 2007 045 097 bekannt ist. Dabei wird das mit Seltenerdmetall dotierte Granulat bei einem Druck von 100 MPa isostatisch zu Presslingen verarbeitet und die Presslinge bei einer Temperatur von 1600 °C unter He-Atmosphäre vorgesintert. Dabei entsteht ein weißer, vorverdichteter Sinterkörper mit relativ dichter Außenhaut, die eine gewisse Abschirmung gegenüber der reduzierenden Atmosphäre beim anschließenden Schmelzprozess bewirkt. Die Abschirmung ist alternativ als dichtes Quarzglas-Hüllrohr ausgeführt. Zum Verglasen werden die vorverdichteten Sinterkörper im Gasdrucksinterofen zuerst unter Vakuum auf eine Temperatur von 1740 °C aufgeheizt und anschließend bei derselben Temperatur bei einem Druck von 1,5 MPa verglast. Es werden Glaskörper aus transparentem Quarzglas erhalten.
Aus der JP 2002356340 A ist ein dotiertes Quarzglas mit hoher Korrosionsbeständigkeit gegenüber Plasma für den Einsatz in der Halbleiterfertigung bekannt. Das Quarzglas enthält 0,1 bis 2 Gew.-% Zirkonium (Zr) zur Erhöhung der Korrosionsbeständigkeit, wobei eine Oberflächenschicht aus Quarzglas hoher Reinheit von 99,95% (in Bezug auf das Gewicht) besteht. Zur Herstellung des dotierten Quarzglases wird ein Gemisch der Ausgangspulver in einem Graphit-Tiegel, dessen Boden mit einer Graphitfolie und dessen Innenwandung mit einer Schicht aus reinem Kristallpulver bedeckt sind zunächst unter Vakuum und anschließen in Stickstoff-Atmosphäre erschmolzen.

Die GB 2 331 985 A beschreibt ein hochreines transparentes Quarzglas, das Verunreinigungen an Fe, Na und K jeweils in einer Menge von 0,01 bis 0,3 ppm, und OH-Gruppen in einer Menge von o bis 3 ppm enthält. Das transparente Quarzglas verfärbt sich auch nach 20-stündigem Erhitzen auf 900 bis 1,400 °C nicht und zeigt danach bei der Wellenlänge von 400 nm einen Extinktionskoeffizienten von maximal 0,009. Zur Herstellung des Quarzglases wird pulverförmiges Siliciumdioxid bei mindestens 1700 °C in einer Graphitform geschmolzen, deren Forminnenflächen mit einer porösen Schicht aus hochreinem Graphit bedeckt sind, so dass das Siliciumdioxid-Pulver nicht mit der Formwandung in Kontakt kommt.

Die EP 2 703 367 A1 beschreibt ein Verfahren zur Wärmebehandlung eines zylinderförmigen Blocks aus synthetischem Quarzglas mit dem Ziel, die schnelle Achse der Doppelbrechung entweder in tangentialer Richtung oder in radialer Richtung einzustellen. Bei der Wärmebehandlung in einem Ofen an Luft werden die sich gegenüberliegenden Stirnflächen des Quarzglasblocks und die Zylindermantelfläche thermischen Isolatorschichten bedeckt, die entweder aus Blöcken, Platten oder Pulverschichten gebildet sind.

### Technische Aufgabenstellung

Das Gasdrucksintern ist eine vergleichsweise kostengünstige Methode zur Herstellung von dotiertem Quarzglas aus pulverförmigen Ausgangsstoffen. Allerdings wird auch bei Abschirmung der reduzierend wirkenden Sinter-Atmosphäre bei einigen Dotierstoffen eine Verfärbung des Quarzglases beobachtet, was auf eine nicht vorhersehbare und unerwünschte Veränderung der chemischen Zusammensetzung oder möglicherweise auf eine inhomogene Verteilung der Dotierstoffe beim Sinterprozess hinweist.

Der Erfindung liegt daher die Aufgabe zugrunde, das bekannte Gasdrucksinterverfahren so zu ein modifizieren, dass die Herstellung von Seltenerdmetalldotiertem Quarzglas mit reproduzierbaren Eigenschaften zuverlässig gewährleistet ist.

### Allgemeine Darstellung der Erfindung

Diese Aufgabe wird ausgehend von einem Verfahren der eingangs genannten Gattung erfindungsgemäß dadurch gelöst, dass als Abschirmung eine Schüttung aus amorphen $SiO_2$-Teilchen mit einer Schichtdicke von mindestens 2 mm eingesetzt wird, deren Erweichungstemperatur um mindestens 20 °C höher ist als die Erweichungstemperatur des dotierten $SiO_2$-Rohstoffs, und die zu Beginn des Schmelzens des Zwischenprodukts gemäß Verfahrensschritt gasdurchlässig ist, und die beim Schmelzen zu einer für ein Druckgas gasdichten Außenschicht sintert, und die eine Gaspermeabilität aufweist, die durch einen Darcy-Koeffizienten zwischen $0,8 \times 10^{-11}$ $m^2$ und $3 \times 10^{-11}$ $m^2$ definiert ist.

Das erfindungsgemäße Verfahren dient zur Herstellung eines Bauteils aus Selten-erdmetall-dotiertem Quarzglas unter Einsatz von natürlich vorkommendem bevorzugt aber synthetisch erzeugtem $SiO_2$-Rohstoff, der in Partikelform vorliegt oder der aus $SiO_2$-Partikeln erzeugt ist. Die Dotierung besteht aus einem Dotierstoff oder aus mehreren Dotierstoffen, wobei die $SiO_2$-Partikel die Dotierung enthalten können und/oder mit feinteiligem Pulver des Dotierstoffs oder der Dotierstoffe vermischt sind. Unabhängig davon wird der die Dotierung enthaltende $SiO_2$-Rohstoff im Folgenden auch kurz als "dotierter $SiO_2$-Rohstoff" bezeichnet. Der Seltenerdmetall-dotierte $SiO_2$-Rohstoff liegt im Zwischenprodukt in der Regel als mechanisch oder thermisch vorverdichteter Sinterkörper, Pressling oder Grünkörper vor; er kann aber auch eine Schüttung aus Partikeln oder aus einem Granulat des $SiO_2$-Rohstoffs bilden. Er ist somit weiter verdichtbar; seine im Vergleich zum vollständig verdichteten Bauteil-Werkstoff verminderte Dichte zeigt sich darin, dass er Hohlräume enthält. Die Dotierstoff-Konzentration liegt typischerweise im Bereich von 0,01 bis 10 mol.-%.

Die amorphen $SiO_2$-Teilchen der gasdurchlässigen Schüttung bestehen zum Beispiel aus Quarzglas, das aus natürlich vorkommendem $SiO_2$-Rohstoff erschmolzen oder das synthetisch erzeugt ist oder aus Mischungen dieser Substanzen. Die $SiO_2$-Teilchen liegen in Form von $SiO_2$-Granulatteilchen, in Form diskreter sphärischer oder zylinderförmiger Partikel, wie etwa in Form von Presskörpern, Tabletten, Schülpen, Fasern und/oder in Form von Bruchstücken, Scherben oder Glassplittern vor.

Die Sinterform enthält Kohlenstoff in der Regel in Form von Grafit, glasartigem Kohlenstoff oder in Form von SiC, oder ihre Innenwandung oder ihre Innenauskleidung besteht aus diesen Substanzen, was beim Gasdrucksintern durch Bildung von Kohlenmonoxid (CO) zu einer reduzierend wirkenden Schmelzatmosphäre führt. Der Innenraum der Sinterform hat bevorzugt Zylindergeometrie und ist gegebenenfalls von einem Boden und einem Zylindermantel als Seitenwand begrenzt.

Der dotierte $SiO_2$-Rohstoff in Form des Zwischenprodukts wird anhand eines modifizierten Gasdrucksinterprozesses zu einem dotierten Quarzglas-Rohling erschmolzen. Der Gasdrucksinterprozess umfasst typischerweise eine Phase, in der das Zwischenprodukt evakuiert wird, um darin enthaltene oder adsorbierte Gase zu entfernen. Diese Prozessphase wird im Folgenden auch als "Vakuumphase" bezeichnet. Und er umfasst eine Phase, bei der unter Einsatz eines Druckgases ein Druck auf das Zwischenprodukt aufgebracht wird, um dieses zusätzlich zu verdichten und Blasen kollabieren zu lassen. Diese Prozessphase wird im Folgenden auch als "Druckphase" bezeichnet.

Das Schmelzen des Zwischenprodukts gemäß Verfahrensschritt (c) umfasst ein Aufschmelzen des Zwischenprodukts sowie ein Aufrechterhalten der Schmelze des Zwischenprodukts. Das Aufschmelzen setzt in der Regel bereits in der Vakuumphase ein. Die erfindungsgemäße Modifizierung dieses Prozesses zeigt folgende Effekte:

1. Die Schüttung der $SiO_2$-Teilchen ist in allen Richtungen gasdurchlässig. Die Gasdurchlässigkeit (oder Permeabilität) der Schüttung hat mehrere Wirkungen, die im Folgenden noch näher betrachtet werden.
Das Zwischenprodukt kann beim Erhitzen Gase freisetzen, die in Hohlräumen enthalten oder an Oberflächen adsorbiert und absorbiert sind. Um Blasenbildung im Bauteil zu vermeiden, müssen diese Gase nach außen abgeführt werden, was durch Absaugen oder Ausdiffusion durch die gasdurchlässige Schüttung in der Vakuumphase geschieht.
Im Verlauf des Gasdrucksinterprozesses kommt es zu einer thermischen Verdichtung der Schüttung, indem Hohlräume kollabieren und sich Strömungskanäle verengen. Dieser Verdichtungsprozess setzt im Außenbereich der Schüttung ein und er bewirkt eine verbesserte Abschirmung des Zwischenprodukts vor der reduzierend wirkenden Atmosphäre. Das bedeutet, je länger der Gasdrucksinter-Prozess andauert und je höher die Temperatur dabei ist, umso geringer wird die Gasdurchlässigkeit der Schüttung und umso stärker wird die Abschirmungswirkung für das Zwischenprodukt. Erfindungsgemäß wandelt sich die zu Beginn des Schmelzens des Zwischenprodukts gasdurchlässige Schüttung beim Schmelzen zu einer für das Druckgas gasdichten, gesinterten Außenschicht. Quarzglas ist für Helium und Wasserstoff in gewissem Umfang durchlässig. Daher enthält das Druckgas vorzugsweise möglichst wenig dieser Komponenten, im Idealfall ist es frei von Wasserstoff und Helium.
Im Verlauf des Gasdrucksinter-Prozesses kommt es somit zu einer Änderung der Gasdurchlässigkeit der Schüttung. Die anfängliche Gasdurchlässigkeit der Schüttung, ihre Tauglichkeit für eine Gasausdiffusion und ihr thermisches Verdichtungsverhalten werden maßgeblich durch Form und Größe der $SiO_2$-Teilchen bestimmt. Deren mittlere Teilchengröße liegt vorzugsweise im Bereich von 150 und 300 $\mu$m ($D_{50}$-Wert). Bei einer mittleren Teilchengröße von mehr als 300 $\mu$m kommt es leicht zu einer lockeren Schüttung, die nur schwierig thermisch verdichtet werden kann. Außerdem bilden sich bei großen $SiO_2$-Teilchen in der Schüttung leicht große Hohlräume, in denen Gase eingeschlossen werden können oder in denen sich Druckgas zu großen Gasblasen ansammeln kann, was wiederum in weichem Glas zu destruktiver Blasenbildung führen können. Eine mittlere Teilchengröße von weniger als 150 $\mu$m bewirkt eine kompakte Schüttung mit einem von Anfang an vergleichsweise hohen Strömungswiderstand und geringer Tauglichkeit für eine Gasausdiffusion.

2. Die chemische Reaktion der $SiO_2$-Teilchen der Schüttung bei Kontakt mit dem Kohlenstoff der Sinterform ist schwach im Vergleich zur Reaktion zwischen dem Kohlenstoff und dem dotierten $SiO_2$-Rohstoff des Zwischenprodukts. Daher ist das Zwischenprodukt bevorzugt allseitig von den $SiO_2$-Teilchen umgeben, so dass der Kontakt mit der grafithaltigen Sinterform unterbunden oder mindestens zuverlässig vermindert wird. Dies erfordert eine Mindestdicke der Schüttung von 2 mm, vorzugsweise mindestens 5 mm zwischen der Kohlenstoff-haltigen Wandung und dem Zwischenprodukt.

3. Andererseits können aus dem Zwischenprodukt freigesetzte Gase bei genügend hohem Gasdruck durch die Zwischenräume der Schüttung nach außen entweichen, was die Gefahr von Gaseinschlüssen und Blasenbildung vermindert. Die Schüttung der $SiO_2$-Teilchen fördert daher eine Gasdiffusion in Richtung von innen nach außen, was im Folgenden auch als "Entlüftungs- oder Gas-Ausdiffusionsfunktion" bezeichnet wird. Diese wird durch das Zusammenspiel von Temperatur und Sintergrad der Schüttung einerseits und der Gaskonzentrations-Verteilung innerhalb des Sinterform-Innenraums andererseits beeinflusst.

4. Die Entlüftungsfunktion der Schüttung und die dadurch erzeugte vorwiegend nach außen gerichtete Gas-Ausdiffusion und die Abschirmung des Zwischenprodukts ermöglichen das Einstellen einer vergleichsweise hohen Schmelztemperatur beim Gasdrucksintern. Vorzugsweise liegt daher die Maximal-Temperatur beim Gasdrucksintern gemäß dem eingangs genannten Verfahrensschritt (c) oberhalb von 1600 °C, besonders bevorzugt oberhalb von 1700 C. Nicht dotiertes, reines Quarzglas reagiert erst bei höheren Temperaturen nennenswert mit Grafit. Diese hohe Schmelztemperatur erleichtert zum einen das Transparentsintern des Quarzglas-Bauteils innerhalb kurzer Zeit, sie trägt zur Verminderung von Gasblasen im Bauteil bei und sie verhindert eine Cristobalitbildung.

5. Das Zwischenprodukt wird in den Innenraum der Sinterform eingebracht und füllt diesen zusammen mit der Schüttung der $SiO_2$-Teilchen mehr oder weniger vollständig aus. Im Idealfall füllen die gasdurchlässige Schüttung und das Zwischenprodukt den Innenraum der Sinterform mindestens in lateraler Richtung gesehen vollständig auf, so dass zwischen Boden und Seitenwand und dem Zwischenprodukt kein freier Raum verbleibt. Beim Gasdrucksintern erweicht das dotierte Quarzglas des Zwischenprodukts. Insbesondere bei hohen Temperaturen droht das Zwischenprodukt unter dem hydrostatischen Druck sich zu verformen und auseinanderzufließen. In dieser Phase stabilisiert die Schüttung die Form des erweichenden Zwischenprodukts, was im Folgenden auch als "thermische Stabilisierung" bezeichnet wird.

Dazu trägt bei, dass die $SiO_2$-Teilchen der Schüttung aus einem amorphen Material bestehen, das eine höhere Viskosität aufweist als der dotierte $SiO_2$-Rohstoff des Zwischenprodukts. Dies zeigt sich zum einen darin, dass die Erweichungstemperatur der $SiO_2$-Teilchen um mindestens 20 °C, besser um mindestens 50 °C, aber vorzugsweise um nicht mehr als 200 °C höher ist als die Erweichungstemperatur des $SiO_2$-Rohstoffs. Der Unterschied in der Erweichungstemperatur gewährleistet, dass die Schüttung noch offenporig sein kann, wenn das Zwischenprodukt bereits sintert oder schmilzt. Gase können so aus dem Zwischenprodukt durch die Schüttung nach außen entwichen. Die Erweichungstemperatur ist materialspezifisch und ergibt sich aus der chemischen Zusammensetzung der Schüttung. Die vergleichsweise höhere Viskosität zeigt sich vorteilhafterweise auch darin, dass die $SiO_2$-Teilchen aus Quarzglas mit einem $SiO_2$-Gehalt von mindestens 99,9 % bestehen, dessen Viskosität bei einer Temperatur von 1200 °C mindestens $10^{12,5}$ dPa·s beträgt. Die beiden zuletzt genannten Eigenschaften werden beispielsweise von reinem, undotiertem Quarzglas erfüllt.

Die zeitliche Änderung der Gasdurchlässigkeit der Schüttung und die erwähnten Abschirmungs-, Stabilisierungs- und Entlüftungsfunktionen hängen außer von der Teilchengrößenverteilung der $SiO_2$-Teilchen (wie oben erläutert) auch von der Schüttdichte und der anfänglichen Porosität, von der Gaspermeabilität und von der Sinterfähigkeit der $SiO_2$-Teilchen ab. Bei hoher Sinterfähigkeit und ausgehend von einer anfänglich ausreichend hohen Porosität und Gaspermeabilität der $SiO_2$-Schüttung ergibt sich eine stärkere Änderung und Ausprägung dieser Wirkungen im Verlauf des Gasdrucksinter-Prozesses als bei einer bereits von Anfang an geringen Porosität.

Die Schüttung kann aber auch aus porösen $SiO_2$-Teilchen mit Poren bestehen, die für ein hindurchströmendes Gas schlecht oder nicht zugänglich sind. Dieser Porenraum steht für einen Gastransport nicht zur Verfügung.

Der Gastransport während der Vakuumphase erfolgt weniger durch viskose Strömung, sondern eher durch Diffusion nach den physikalischen Gesetzmäßigkeiten der sogenannten Knudsen-Strömung. Die freie Weglänge der Gasteilchen ist dann mit der Größe der durchströmbaren Hohlräume der Schüttung vergleichbar. Dabei tragen offene Hohlräume (selbst wenn sie groß sind), die aber nur schwer zugänglich und beispielsweise nur über enge Kanäle erreichbar sind, weder für den Gastransport durch viskose Gasströmung noch durch Knudsen-Strömung wesentlich bei.

Als geeignetes Maß für den durchströmbaren, effektiven Porenraum und gleichzeitig auch als Maß für die Tauglichkeit des Porenraums für Entlüftung und Gas-Ausdiffusion unter Vakuum unter einem "Knudsen-Diffusions-Regime" wird daher die Gaspermeabilität der Schüttung angesehen. Diese ist bei einer beanspruchten Verfahrensweise durch einen Darcy-Koeffizienten zwischen $0,8 \times 10^{-11}$ m² und $3 \times 10^{-11}$ m² und bevorzugt durch einen Darcy-Koeffizienten zwischen $0,8 \times 10^{-11}$ m² und $1,3 \times 10^{-11}$ m² definiert. Zur quantitativen Erfassung der Gaspermeabilität einer Schüttung kann die Durchströmgeschwindigkeit eines Gases dienen, die sich bei gegebenem Druckgefälle zwischen Vor- und Hinterdruck einstellt. Diese hängt sowohl von der Viskosität des strömenden Gases als auch von der Beschaffenheit des Porenraums in der Schüttung ab. Der Porenraum wird maßgeblich durch das Porenvolumen, die Porengrößenverteilung und die Porenform bestimmt. Die Permeabilität der Schüttung kann als charakteristisches Maß für den offenen Porenraum dienen, was im Folgenden näher betrachtet wird.

Bei laminarer Strömung des Mediums ist die Permeabilität eine materialspezifische Konstante mit der metrischen Einheit m²; sie wird aber meist in der Einheit "Darcy" angegeben, wobei gilt: 1 Darcy: $\sim 10^{-8}$ cm². Definitionsgemäß hat ein poröser Stoff die Permeabilität von 1 Darcy, wenn durch einen Querschnitt von 1 cm² bei einem Druckgefälle von 1 atm/cm pro Sekunde ein Volumen von 1 cm³ einer Flüssigkeit mit einer Viskosität von 1 Centipoise (= 1 mPas (-Viskosität von Wasser)) strömt. Zwischen der Strömungsgeschwindigkeit des Mediums und dem Druckgefälle ergibt sich folgender Zusammenhang:

$$v = \frac{\kappa}{\mu} \frac{\Delta P}{\Delta x} \qquad (1)$$

mit:

| | | |
|---|---|---|
| v | Strömungsgeschwindigkeit des Mediums | in m/s |
| K | kappa; spezifische Permeabilität der Schüttung | in m² |
| μ | dynamische Viskosität des strömenden Mediums | in Pa·s |

(fortgesetzt)

| ΔP | Delta P; die Druckdifferenz | in Pa |
| Δx | Delta x; die Schichtdicke der Schüttung | in m |

Der kappa-Wert wird auch als Darcy-Koeffizient bezeichnet. Er ist ein Materialparameter der Schüttung und beschreibt deren Gasdurchlässigkeit: je größer der Darcy-Koeffizient ist, umso leichter strömt das Medium durch die Schüttung hindurch. Der Darcy-Koeffizient ist somit auch ein Maß für die Beschaffenheit des effektiv für den Messgasstrom zugänglichen Porenraums der Schüttung und beispielsweise abhängig von Partikelgröße, Partikelgrößenverteilung, Partikelform, Schüttdichte und Rauigkeit.

Der Darcy-Koeffizient definiert die anfängliche Gaspermeabilität der Schüttung und damit den anfänglichen effektiven Porenraum und dessen Tauglichkeit für die Gas-Ausdiffusion unter Vakuum unter einem "Knudsen-Diffusions-Regime". Die anfängliche Gaspermeabilität sollte nicht zu niedrig sein aber auch nicht zu hoch; mittlere und besonders bevorzugte Darcy-Koeffizienten liegen im Bereich von $0,8 \times 10^{-11}$ $m^2$ bis $1,3 \times 10^{-11}$ $m^2$. Im Verlauf des Gasdrucksinterns kommt es in der Regel zu einer Verdichtung der Schüttung. Die Schüttung ist im Idealfall während der Vakuumphase des Gasdrucksinterprozesses gasdurchlässig und verdichtet sich erst bei Erreichen der höchsten Prozesstemperatur zur vollständigen Abschirmung des bis dahin erweichten Zwischenprodukts.

Eine anfängliche hohe Gaspermeabilität der Schüttung ist aber nicht nachteilig, wenn sich die Schüttung vergleichsweise rasch verdichtet. Dies kann bei einer hohen Sinteraktivität der Schüttung der Fall sein. Als Maß für die Sinteraktivität einer Schüttung kann in grober Näherung die Teilchengrößenverteilung dienen.

Dieses dynamische Sinter- und Schmelzverhalten der Schüttung berücksichtigt eine bevorzugte Verfahrensweise, bei der die Schüttung eine Gaspermeabilität aufweist, die durch einen Darcy-Koeffizienten im Bereich von $2 \times 10^{-11}$ $m^2$ bis $3 \times 10^{-11}$ $m^2$ definiert ist und eine enge Korngrößenverteilung aufweist, die durch einen $D_{10}$-Wert zwischen 150 und 250 $\mu$m und durch einen $D_{90}$-Wert zwischen 350 und 450 $\mu$m gekennzeichnet ist.

Vorzugsweise wird eine Schüttung mit vergleichsweise geringer Schüttdichte im Bereich von 0,75 bis 1,3 $g/cm^3$ eingesetzt, so dass sie zu Beginn einen geringen Strömungswiderstand für Gase bildet und eine Porosität hat, die eine Gas-Ausdiffusion erlaubt. Im Hinblick darauf weist die Schüttung vorteilhafterweise eine anfängliche effektive Porosität im Bereich von 40 % bis 50 % auf.

Im Fall der vorzugsweise eingesetzten amorphen dichten $SiO_2$-Teilchen hängt die Schüttdichte von der Teilchengröße, der Teilchengrößenverteilung und der Morphologie der $SiO_2$-Teilchen ab. Die $SiO_2$-Teilchen haben hierbei bevorzugt eine BET-Oberfläche von weniger als 2 $m^2/g$, bevorzugt eine BET-Oberfläche von weniger als 1 $m^2/g$, und sie zeigen keine offene Porosität.

Im Hinblick auf die oben erwähnte "thermische Stabilisierungswirkung" der Schüttung hat es sich als besonders vorteilhaft erwiesen, wenn die $SiO_2$-Teilchen aus Quarzglas mit einem $SiO_2$-Gehalt von mindestens 99,9 % bestehen, dessen Viskosität bei einer Temperatur von 1200 °C mindestens $10^{12,5}$ dPa·s beträgt.

Sowohl nicht dotiertes Quarzglas, das aus natürlich vorkommenden Quarzkristallen erschmolzen ist als auch Quarzglas, das aus Si-haltigen Ausgangssubstanzen durch Hydrolyse, Pyrolyse oder Polykondensation synthetisch erzeugt ist, erfüllen diese Kriterien.

Alternativ dazu hat sich auch eine Verfahrensvariante bewährt, bei der die Schüttung $SiO_2$-Teilchen aus dotiertem Quarzglas enthält, wobei die Dotierung einen die Viskosität von Quarzglas verringernden Dotierstoff umfasst, und wobei in unterschiedlicher Konzentration dotierte $SiO_2$-Teilchen in der Abschirmung so verteilt werden, dass die Dotierstoff-Konzentration zwischen der Formwandung und dem Zwischenprodukt stufenweise oder graduell zunimmt.

Im Außenbereich der Schüttung sind nicht oder gering-dotierte $SiO_2$-Teilchen mit vergleichsweise hoher Viskosität vorhanden, und im Innenbereich der Schüttung finden sich $SiO_2$-Teilchen mit einer höheren Dotierstoff-Konzentration und damit einhergehend einer geringeren Viskosität. Dadurch geling es, die erwähnte "Gas-Ausdiffusionsfunktion" der Schüttung beim Gasdrucksintern auch bei hoher Temperatur aufrecht zu erhalten, und beim Abkühlen mechanische Spannungen zwischen der Abschirmung und dem Zwischenprodukt zu vermindern. Als die Viskosität von Quarzglas verringernde Dotierstoffe kommen beispielsweise Seltenerdmetalle sowie Fluor und Chlor in Betracht.

Es hat sich als günstig erwiesen, wenn die $SiO_2$-Teilchen einen Gesamtgehalt an Verunreinigungen an Fe, Cu, Cr und Ti von weniger als 1000 Gew.-ppb, vorzugsweise weniger als 200 Gew.-ppb aufweisen.

Verunreinigungen aus der Abschirmung können bei hohen Temperaturen in das Quarzglas des Bauteils gelangen. Je nach Wellenlänge der Laser- oder Pumpstrahlung des optischen Bauteils wirken sich Verunreinigungen auf die optische Dämpfung aus. Dämpfung kann zur Erwärmung und zur Zerstörung des optischen Bauteils führen. Die genannten Metalle Fe, Cu, Cr und Ti werden als sogenannte "Tracer-Metalle" angesehen, deren Präsenz darauf hindeutet, dass auch andere in der Hinsicht schädliche Verunreinigungen in der Schüttung enthalten sind.

Die oben genannten Wirkungen der Schüttung hinsichtlich Gas-Ausdiffusionsfunktion und Stabilisierung hängen auch von der Schichtdicke ab, mit der die gasdurchlässige Schüttung das Zwischenprodukt umgibt. Die mittlere Schichtdicke beträgt vorzugsweise mindestens 10 mm. Allerdings nimmt mit der Schichtdicke der Schüttung die absolute Wärmekapazität zu, die einem raschen Abkühlen des Bauteils nach dem Schmelzen entgegenwirkt. Eine hohe Abkühlgeschwindigkeit ist aber erwünscht, um eine Kristallisation im dotierten Quarzglas des Bauteils zu verhindern. Daher sind Schichtdicken von mehr als 10 cm nicht vorteilhaft.

Beim Schmelzen des Zwischenprodukts im Gasdrucksinterprozess wird die Abschirmung in der Regel zu einem Hüllmaterial verglast, das nach Abschluss der Gasdrucksinter-Behandlung vorzugsweise entfernt wird. Das Entfernen des Hüllmaterials erfolgt beispielsweise durch Ausbohren des verglasten Zwischenprodukts oder durch Abschleifen oder Abätzen des Hüllmaterials.

Das Gasdrucksintern umfasst vorzugsweise folgende Verfahrensschritte:

(a) eine Vorbehandlung, die ein Aufheizen des Zwischenprodukts auf eine Temperatur im Bereich zwischen 1000 °C und 1300 °C unter Anlegen und Aufrechterhalten eines Unterdrucks umfasst,

(b) ein Aufschmelzen des Zwischenprodukts bei einer Temperatur oberhalb von 1500 °C unter einem Unterdruck und einer Schmelzdauer von mindestens 30 min, wobei die Schüttung zu einer gasundurchlässigen Außenschicht sintert, und

(c) eine Druckbehandlung des geschmolzenen Zwischenprodukts bei einer Temperatur oberhalb von 1500 °C in einer Inertgas-Atmosphäre unter einem Überdruck im Bereich zwischen 2 bar und 20 bar während einer Dauer von mindestens 30 min.

Bei dieser Ausführungsform des erfindungsgemäßen Verfahrens ist eine mehrstufige Temperatur- und Druckbehandlung vorgesehen.

In der ersten Prozessstufe wird an der Sinterform Unterdruck angelegt, das Zwischenprodukt erhitzt und dabei von Gasen und anderen flüchtigen Verunreinigungen befreit. Dabei ist ein Dichtsintern sowohl des Zwischenprodukts als auch der als Abschirmung dienenden Schüttung möglichst zu vermeiden. Daher ist diese Temperaturbehandlung auf eine Maximaltemperatur von 1300 °C beschränkt und es wird ein Unterdruck von vorzugsweise weniger als 100 mbar (absoluter Druck) eingestellt. Da ein Sintervorgang von Diffusionsvorgängen bestimmt wird, die sowohl von der Zeit als auch von der Temperatur abhängen, ist verständlich, dass ein kurzzeitiges Aufheizen auf eine Temperatur oberhalb von 1300 °C nicht zwangsläufig zu einem Dichtsintern führt.

In einer weiteren Prozessstufe wird das von Gasen befreite Zwischenprodukt bei einer Temperatur im Bereich von 1500 °C bis etwa 1850 °C - bevorzugt bei einer Temperatur von mindestens 1600 °C - zu dem Bauteil aus transparentem, dotiertem Quarzglas aufgeschmolzen, wobei in der Sinterform weiterhin ein Unterdruck von vorzugsweise weniger als 100 mbar (absoluter Druck) erzeugt und aufrechterhalten wird. Während dieser Schmelz-Behandlung kommt es zu einer Verdichtung der $SiO_2$-Teilchen-Schüttung, die im Idealfall zu einer für das Druckgas der anschließenden Druckphase gasdichten Außenschicht und zur vollständigen Abschirmung des weichen Zwischenprodukts führt. Die dafür erforderliche Dauer hängt von den Sintereigenschaften der $SiO_2$-Schüttung ab und beträgt mindestens 30 min.

Die gasdichte Außenschicht wirkt wie ein weiches Hüllrohr um das Zwischenprodukt und ermöglicht in der nächsten Prozessstufe, der Druckphase, das Aufbringen eines isostatischen Drucks auf das Zwischenprodukt, ähnlich wie bei einem Heißpressen oder heißisostatischen Pressen unter Einsatz einer verformbaren Außenhülle. Dabei wird im Innenraum der Sinterform eine Hochdruck-Atmosphäre beispielsweise aus Stickstoff oder Argon erzeugt und aufrechterhalten. Diese Überdruckbehandlung bei hoher Temperatur entspricht somit einem Heißpressen oder heißisostatischen Pressen des gesinterten Zwischenprodukts. Gasblasen, die nach dem Schmelzen im Quarzglas eingeschlossen werden dabei aufgelöst oder verkleinert.

Bei einer besonders bevorzugten Verfahrensvariante wird das Zwischenprodukt zeitweise einer Atmosphäre ausgesetzt, die Helium und/oder Wasserstoff in einer Konzentration von mindestens 50 Vol.-% enthält.

Helium und Wasserstoff diffundieren in Quarzglas vergleichsweise schnell. Sie können andere, langsamer diffundierende Gase aus vorhandenen Hohlräumen der Teilchen-Schüttung oder des Zwischenprodukts verdrängen und sind in der Lage, auch in der prozesstypisch kurzen Dauer des Gasdrucksinterprozesses aus der viskosen Quarzglasschmelze des Zwischenprodukts zu entweichen. Wasserstoff kann sich darüber hinaus in Quarzglas unter Bildung von Hydroxylgruppen lösen. Dadurch können sowohl die Blasenbildung als auch das Blasenwachstum vermindert werden.

Das aus dem Zwischenprodukt erschmolzene Bauteil wird in der Regel einer Endbearbeitung unterzogen, die einen mechanischen Abtrag und ein Glätten umfasst. Das Glätten der mechanisch bearbeiteten Oberfläche kann durch chemisches Ätzen oder durch eine Feuerpolitur erfolgen.

Das Bauteil aus dem mit Seltenerdmetall-dotierten Quarzglas ist beispielsweise laseraktiv oder laserpassiv und zum Einsatz in der Lasertechnik, oder es ist zum Einsatz bei der Halbleiterfertigung in ätzend wirkender Umgebung vorgesehen.

Definitionen

Einzelne Verfahrensschritte und Begriffe der obigen Beschreibung werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

Quarzglas

Unter Quarzglas wird hier hochkieselsäurehaltiges Glas mit einem $SiO_2$-Anteil von mindestens 90 mol.-% verstanden.

Granulate

Man kann zwischen Aufbaugranulation und Pressgranulation und verfahrenstechnisch zwischen Nass- und Trocken-Granulierverfahren unterscheiden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.
Beim Granulieren bilden sich durch Zusammenlagerungen der $SiO_2$-Primärteilchen diskrete, größere Agglo-merate, die hier als "$SiO_2$-Granulatteilchen" oder kurz "Granulatteilchen" bezeichnet werden. In ihrer Gesamtheit bilden die Granulatteilchen ein "$SiO_2$-Granulat".

Reinigung des Granulats

Das Granulat kann vor seinem Einsatz gereinigt werden. Bei der "Reinigung" wird der Gehalt an Verunreinigungen im Granulat verringert. Die Hauptverunreinigungen sind Restwasser (OH-Gruppen), kohlenstoffhaltige Verbindungen, Übergangsmetalle, Alkalimetalle und Erdalkalimetalle, die aus dem Einsatzmaterial stammen oder durch die Prozessierung eingetragen werden. Bereits durch Einsatz reiner Einsatzmaterialien und durch entsprechendes Equipment und Prozessierung unter Reinraumbedingungen kann ein geringer Verunreinigungsgehalt erreicht werden. Um noch höhere Anforderungen an die Reinheit zu erfüllen, kann das Granulat in einem Drehrohrofen bei hoher Temperatur (> 800°C) unter chlorhaltiger und sauerstoffhaltiger Atmosphäre behandelt werden. Dabei dampft restliches Wasser ab, organische Materialien reagieren zu CO und $CO_2$ und viele Metalle (wie beispielsweise Eisen und Kupfer) können zu flüchtigen, chlorhaltigen Verbindungen konvertiert werden.

Sintern / Verdichten / Schmelzen

Mit "Sintern" oder "Verdichten" wird hier eine Behandlung bei erhöhter Temperatur von mehr als 1100 °C bezeichnet, die aber nicht zum vollständigen Verglasen und einem transparenten Zwischenprodukt führt. Dieser Zustand wird erst durch "Schmelzen" im Gasdrucksinterofen erreicht.

Vakuum / Unterdruck

Der Gasdrucksinterprozess kann eine Unterdruckphase beinhalten, bei dem das Zwischenprodukt unter "Vakuum" erhitzt wird. Der Unterdruck wird als absoluter Gasdruck angegeben. Unter Vakuum wird ein absoluter Gasdruck von weniger als 2 mbar verstanden.

Viskosität

Die Messung der "Viskosität" des Quarzglases erfolgt mittels Balkenbiegeviskosimeter. Die Balkenbiegeviskosimetrie deckt einen Viskositätsbereich von $10^8$ - $10^{15}$ dPas ab. Der Messaufbau umfasst eine beheizbare Dreipunktbiegevorrichtung mit einem Messbalken aus dem zu messenden Quarzglas (Balken/Streifen: 50mm lang, 3mm hoch, 5mm breit). Die Messgröße ist die Durchbiegegeschwindigkeit bei der jeweiligen Temperatur. Für undotiertes Quarzglas liegen typische Viskositätswerte bei einer Temperatur von 1280 um $10^{12,1}$ dPa·s und bei 1133 °C um $10^{11,3}$ dPa·s.

Erweichungstemperatur

Bekanntermaßen kann Gläsern keine scharfe Erweichungstemperatur zugeordnet werden, sondern eher ein Erweichungstemperaturbereich. Zwecks Festlegung eines Temperaturwertes wird vorliegend auf die Bestimmung nach DIN ISO 7884 (1998) Bezug genommen, gemäß der die Erweichungstemperatur als diejenige Temperatur definiert ist, bei der das Glas eine Viskosität von $10^{7,6}$ dP·as aufweist. Für die Erweichungstemperatur von undotiertem Quarzglas werden in der Literatur Temperaturwerte im Bereich von 1600°C bis 1730°C genannt.

Spezifische BET-Oberfläche

Die "spezifische Oberfläche (BET)" wird nach der Methode von Brunauer, Emmet und Teller (BET) anhand der DIN 66132 ermittelt und basiert auf Gasabsorption an der zu messenden Oberfläche.

Ausführungsbeispiel

Nachfolgend wird die Erfindung anhand eines Ausführungsbeispiels und einer Zeichnung näher beschrieben. Dabei zeigt in schematischer Darstellung

**Figur 1** eine Sinterform für einen Gasdrucksinterprozess, mit einer Quarzglas-Schüttung, in der ein zu schmelzendes Zwischenprodukt eingebettet ist,

**Figur 2** eine Sinterform für einen Gasdrucksinterprozess, mit einer Quarzglas-Schüttung, die ein zu schmelzendes Zwischenprodukt vollständig umhüllt,

**Figur 3** Balkendiagramme zur Teilchengrößenverteilung von $SiO_2$Sanden in einer dreidimensionalen Ansicht,

**Figur 4** Balkendiagramme zur Schüttdichte der $SiO_2$-Sande,

**Figur 5** Messzelle zur Ermittlung des Darcy-Koeffizienten von -Schüttungen anhand einer Explosionszeichnung, und

**Figur 6** ein Diagramm zur Permeabilitätsmessung von $SiO_2$-Schüttungen.

Herstellung eines porösen Zwischenprodukts aus dotiertem Quarzglas

Es wird ein Schlicker aus diskreten, synthetisch erzeugten $SiO_2$-Partikeln mit einer mittleren Teilchengröße um 10 $\mu$m in Reinstwasser hergestellt. Eine Menge von 285,7g des Schlickers mit einer Restfeuchte von 37,4% wird mit 1000ml Reinstwasser verdünnt. Durch Zugabe einer konzentrierten Ammoniaklösung in einer Menge von 75 ml wird ein pH-Wert von 10 eingestellt.

Zur Herstellung eines mit $Yb_2O_3$ und $Al_2O_3$ dotierten Quarzglases wird parallel eine wässrige Dotierstofflösung aus $AlCl_3$ und $YbCl_3$ (Molverhältnis 4:1) in 400 ml Reinstwasser erzeugt und durch einen 25 $\mu$m-Membranfilter abfiltriert. Anstelle der Chloride können auch andere Ausgangssubstanzen eingesetzt werden, wie beispielsweise organische Verbindungen, Nitride oder Fluoride.

Der durch Rühren bewegten Suspension wird die Dotierstofflösung in Form eines Sprühnebels während einer Dauer von 65 Minuten zugeführt. Zur Erzeugung des Sprühnebels wird die Dotierstofflösung mittels einer Sprühdüse zerstäubt, wobei ein Arbeitsdruck von 2 bar und eine Durchflussrate von 0,8 l/h eingestellt wird. Der so erzeugte Sprühnebel enthält Tropfen mit einem mittleren Durchmesser zwischen 10 $\mu$m und 40 $\mu$m. Aufgrund des hohen pH-Wertes der Suspension kommt es unmittelbar zu einer Mischfällung von Hydroxiden und Oxiden der beiden Dotierstoffe in Form von $Al(OH)_3$ und $Yb(OH)_3$. Die so gebildeten Feststoffteilchen adsorbieren an den vorhandenen Oberflächen der $SiO_2$-Teilchen und werden dadurch immobilisiert, so dass eine Koagulation der Feststoffteilchen oder eine Sedimentation verhindert wird. Auf diese Weise wird in dem Schlicker eine Dotierstoffkonzentration von 2 mol-% Al und 0,5 mol-% Yb (bezogen auf den Si-Gehalt der Suspension) eingestellt. Anschließend wird der mit den Dotierstoffen versetzte Schlicker weitere 2 Stunden lang durch Rühren homogenisiert. Mit dieser Vorgehensweise ist gewährleistet, dass ein optimal homogen dotierter $SiO_2$-Schlicker erhalten wird.

Der dotierte $SiO_2$-Schlicker wird eingefroren und durch sogenannte Frostgranulation zu einem Granulat weiterverarbeitet. Dabei wird der nach dem Auftauen erhaltene Granulatschlamm mehrmals mit Reinstwasser gewaschen und das überschüssige Wasser jeweils abdekantiert.

Anschließend wird der von Ammoniak befreite und gereinigte Granulatschlamm bei einer Temperatur um 400 °C 6 Stunden lang getrocknet. Das getrocknete Granulat wird in eine Kunststoffform eingeschweißt und bei 400bar isostatisch gepresst.

Der so erhaltene Granulat-Pressling wird unter Heliumspülung erhitzt und danach etwa 8 Stunden lang in chlorhaltiger Atmosphäre bei etwa 900 °C behandelt. Dadurch werden Verunreinigungen aus dem Pressling entfernt und der Hydroxylgruppengehalt wird auf weniger als 10 Gew.-ppm reduziert.

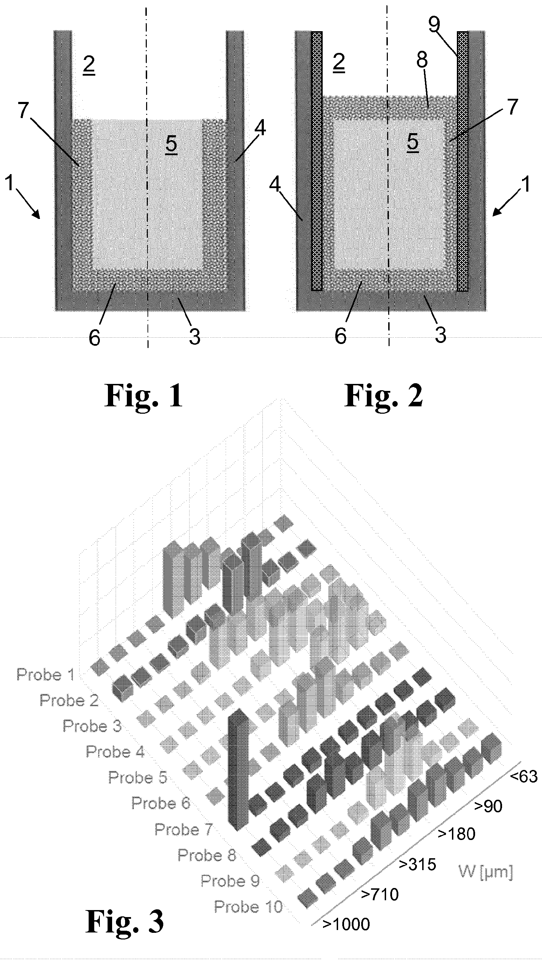

Der gereinigte Granulatpressling hat Zylinderform mit einem Durchmesser von 30 mm und einer Länge von 100 mm. Seine mittlere Dichte beträgt etwa 60 % der Dichte des dotierten Quarzglases. Er wird als Zwischenprodukt in einem modifizierten Gasdrucksinterprozess zu einem Bauteil aus dem dotierten, transparenten Quarzglas erschmolzen. Der dafür eingesetzte Gasdrucksinterofen mit einer evakuierbaren Sinterform 1 aus Grafit ausgestattet und wird nachfolgend an einem Beispiel und **Figur 1** näher erläutert.

Der Boden 3 der Sinterform 1 wird mit $SiO_2$-Teilchen unter Bildung einer Bodenschicht 6 mit einer Schichtdicke von 2 cm belegt. Das mechanisch vorverdichtete Zwischenprodukt 5 wird mittig in den Innenraum 2 und auf die Bodenschicht 6 aufgesetzt. Der verbleibende Spalt zwischen Seitenwand 4 und Zwischenprodukt 5 wird mit $SiO_2$-Teilchen unter Bildung einer Seitenwandschicht 7 mit einer Schichtdicke von 2 cm aufgefüllt. Abschließend wird die Oberseite des Zwischenprodukts 5 ebenfalls mit einer Deckschicht 8 aus den $SiO_2$-Teilchen mit einer Schichtdicke von 2 cm bedeckt, wie dies in **Figur 2** schematisch gezeigt ist.

Bodenschicht 6, Seitenwandschicht 7 und Deckschicht 8 werden im Folgenden zusammenfassend auch als "Schüttung" oder "Teilchen-Schüttung" bezeichnet.

Um versuchsweise die Schichtdicke der Seitenwandschicht 7 zu verkleinern, und zwecks Bestimmung einer erforderlichen Mindestschichtdicke wurden in einer Versuchsreihe in den Innenraum 2 an den Innendurchmesser angepasste Hülsen 9 aus glasartigem Kohlenstoff mit Stärken zwischen 5 mm und 8 mm eingesetzt. Dabei ergab sich, dass die Schüttung bei einer Schichtdicke von 2 mm (Durchmesser der Innenhülse 9 = 8 mm) zwar den direkten Kontakt zwischen Grafit und Zwischenprodukt 5 noch verhindert, allerdings kein genügend großes Porenvolumen zur Verfügung steht, um die beim Sintern und Schmelzes des Zwischenprodukts entstehenden Gase seitlich und nach oben durch die Schüttung abführen zu können. Mit anderen Worten, es bildet sich keine ausreichende Gas-Ausdiffusion mehr aus.

In einem weiteren Vorversuch wurde anstelle der Bodenschicht 6 eine 2 mm dicke Quarzglasplatte auf den Boden 3 aufgelegt. Dabei zeigte sich, dass es bei einer Temperatur ab etwa 1600 °C durch den flächigen Kontakt von Quarzglas und dem Grafit des Formbodens 3 zu Reaktionen zwischen $SiO_2$ und Kohlenstoff kommt, die zu massiven Bildung von Gas führt, was das Zwischenprodukt zerstört.

Charakterisierung der Schüttungen aus $SiO_2$-Sanden

Es wurde eine Vielzahl von $SiO_2$-Sanden aus $SiO_2$-Teilchen mit einem $SiO_2$-Gehalt von jeweils etwa 100 % hinsichtlich Korngrößenverteilung, Schüttdichte, Porosität, Gaspermeabilität und ihrem Schmelzverhalten analysiert. Die Herstellungsmethoden und charakteristische Eigenschaften dieser $SiO_2$-Sande sind in Tabelle 1 zusammengefasst.

Messung der Teilchengrößenverteilung

Die Teilchengröße und Teilchengrößenverteilung wurden durch Siebanalyse unter Einsatz einer Siebeinrichtung ermittelt, wie in der DIN 66165 (Partikelgrößenanalyse; Siebanalyse) beschrieben ist. Dabei wird eine bestimmte Menge der zu untersuchenden $SiO_2$-Sande durch mehrere Siebe in Fraktionen getrennt und es werden deren Massenanteile ermittelt.

**Figur 3** zeigt die Teilchengrößenverteilungen der Proben 1 bis 10 als Balkendiagramme. Die Sieb-Maschenweite W ist in $\mu$m angegeben.

In Tabelle 1 sind die Teilchengrößenverteilungen der Schüttungen anhand der jeweiligen $D_{10}$-, $D_{50}$- und $D_{90}$-Werte charakterisiert. Diese Werte werden aus Teilchengrößenverteilungskurven entnommen, die das kumulative Volumen der $SiO_2$-Sande in Abhängigkeit von der Teilchengröße zeigen. Dabei kennzeichnet der $D_{10}$-Wert diejenige Teilchengröße, die von 10% des kumulativen Volumens der $SiO_2$-Teilchen nicht erreicht wird, und dementsprechend der der $D_{50}$-Wert und der $D_{90}$-Wert diejenige Teilchengröße, die 50 % beziehungsweise 90% des kumulativen Volumens der $SiO_2$-Teilchen nicht erreichen.

[*2]: Der kommerziell erhältliche Sand Nr. 10 hat eine nominalen $D_{50}$-Wert von 40 $\mu$m. Die Messung der Teilchengrößenverteilung durch Siebanalyse ergibt aber unerwartet hohe $D_{50}$- und $D_{90}$- Werte. Dieses Messergebnis wird auf die Bildung von mehr oder weniger lockeren Agglomeraten der $SiO_2$-Teilchen zurückgeführt, die zwar der mechanischen Belastung bei der Siebanalyse standhalten, sich aber ansonsten auf das Porenvolumen, die Gaspermeabilität und das Sinterverhalten der Schüttung nicht nennenswert auswirken.

Messung der Schüttdichte

Der Begriff "Schüttdichte" (engl.: bulk density, auch als "Schüttgewicht" bezeichnet) von Granulat oder Pulvers wird in Masse pro Volumeneinheit angegeben. Die Schüttdichte ist definiert als die Masse vieler Materialpartikel bezogen auf das von ihnen belegte Gesamtvolumen. Sie wird gemessen, indem ein Behälter mit bekannten Volumen aufgefüllt und gewogen wird. Die Schüttdichte von in Pulver- oder Granulatform vorliegenden Substanzen wird nach der Internationalen Norm ISO 697 (frühere Ausgabe: DIN 53912) bestimmt. Im Unterschied dazu bezeichnet die "Stampfdichte" (engl.: tapped density) diejenige Dichte, die nach mechanischer Verdichtung des Pulvers oder des Granulats beispielsweise mittels Vibration des Behälters erzeugt wird. Sie wird nach DIN/ISO 787 Teil 11 ermittelt.

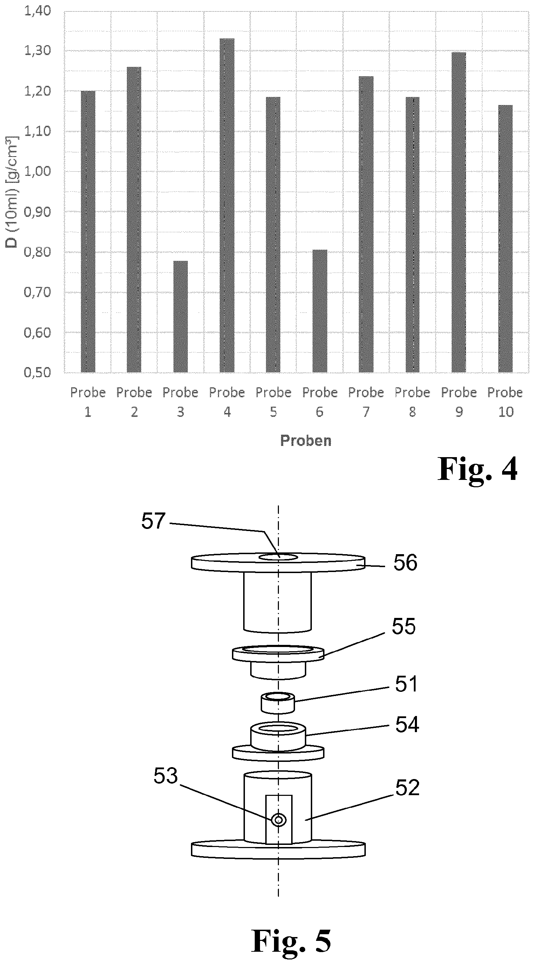

Die Schüttdichten der SiO$_2$--Sande wurden an 10 ml Probenvolumina ermittelt. Die Ergebnisse sind in Spalte 4 von Tabelle 1 angegeben und als Balkengrafik in **Figur 4** dargestellt. Auf der y-Achse ist die Schüttdichte D (für 10 ml Probenvolumen) in g/cm$^3$ aufgetragen.

Messung des Verunreinigungsgehalts

Der Verunreinigungsgehalt an Li, Na, K, Mg, Ca, Fe, Cu, Cr, Mn, Ti, Al, Zr werden mittels ICP-OES oder ICP-MS-Methoden ermittelt.

Messung der Porosität

Die Porosität stellt das Porenvolumen, das sind alle Hohlräume der gasdurchlässigen Schüttung, in Teilen ihres Gesamtvolumens dar. Die Bestimmung der Porosität erfolgt anhand der Volumenmessung unter Berücksichtigung der spezifischen Dichte von transparentem, Quarzglas; diese liegt bei etwa 2,2 g/cm$^3$.

Die Porositäts-Messwerte für die SiO$_2$-Schüttungen sind in Spalte 3 von Tabelle 1 genannt.

Die mit [*1)] gekennzeichneten hohen Messwerte der Proben 3 und 6 sind darauf zurückzuführen, dass die betreffenden Schüttungen aus thermisch vorverdichteten, porösen Sprühgranulat-Teilchen mit einer BET-Oberfläche von etwa 30 m$^2$/g (Probe 3) beziehungsweise von 25 m$^2$/g (Probe 6) bestehen. Bei diesen Schüttungen ist Porenraum sowohl zwischen den einzelnen Granulatteilchen vorhanden als auch teilweise geschlossene Poren innerhalb der Granulatteilchen. Der vergleichsweise große Porenraum macht sich auch bei der Messung der Schüttdichte bemerkbar (sie ist vergleichsweise niedrig), jedoch nicht bei der Messung der Gaspermeabilität, für die nur das für die Gasströmung effektiv zur Verfügung stehende Porenvolumen maßgeblich ist. Im Unterschied zu den beiden durch Sprühgranulation erzeugten SiO$_2$-Sanden der Proben 3 und 6 zeigen alle anderen Sande keine offene Porosität und haben eine BET-Oberfläche von weniger als 1 m$^2$/g.

Messung der Gaspermeabilität

Die Gaspermeabilität ist daher ein besonders aussagekräftiges Kriterium für die Feststellung der Eignung eines SiO$_2$-Sandes für eine Abschirmung im Sinne der vorliegenden Erfindung.

**Figur 5** zeigt eine Explosionszeichnung der zur Ermittlung des Darcy-Koeffizienten verwendeten Messzelle. Der zu messende SiO$_2$-Sand ist innerhalb einer Messhülse 51 zwischen beidseitig angeordneten Sieben mit einer Maschenweite von 15 $\mu$m eingeklemmt. Der Aufnahmeraum der Messzelle 51 für den Sand hat einen Innendurchmesser von 15 mm und eine Höhe von 20 mm. Die Messzelle 51 wird in einen nach außen abgedichteten Strömungskanal eingesetzt, der von einem Fußteil 52 mit Gasanschluss 53, einem unteren (54) und einem oberen (55) Spannhut und von einem Deckel 56 mit einem Gasauslass 57 gebildet wird. Der untere Spannhut 54 hat eine Innenbohrung, in die von unten ein Zylinderstutzen des Fußteils 52 hineinragt und darin dicht anliegt. Auf dem Zylinderstutzen liegt das untere der erwähnten Siebe auf Die Messhülse 51 ist mit zwei umlaufenden Dichtringen versehen, von denen der untere an der Innenwandung der Innenbohrung des unteren Spannhuts 54 und der obere an der Innenwandung der Innenbohrung des oberen Spannhuts 55 anliegt, in die von oben ein Dichtstutzen des Deckels 56 hineinragt, an dem das obere Sieb anliegt. Über nach außen ragende Flansche werden Fußteil 52 und Deckel 56 mittels einer Spanneinrichtung (in der Figur nicht gezeigt) gegeneinander verspannt.

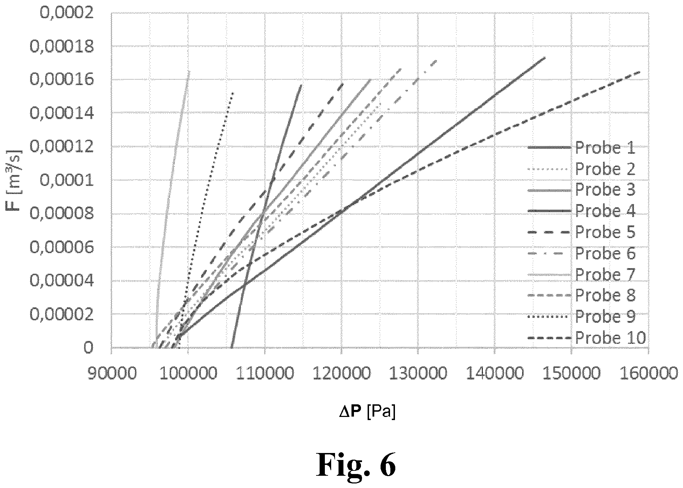

Bei der Messung wird die Messzelle 51 von unten mit Luft angeströmt und der sich ausbildende Differenzdruck zwischen dem Druck in der Gaszufuhrleitung und dem Entspannungsdruck (= Umgebungsdruck beim Gasauslass) wird gemessen. Durch Veränderung der Luftmenge pro Zeiteinheit, also der Flussrate, zwischen Null und etwa 0,00018 m$^3$/s wird für jeden Sand der Verlauf des Differenzdrucks in Abhängigkeit von der Flussrate bestimmt und gegen eine Leermessung (mit leerer Messzelle mit beidseitigen Sieben) referenziert. Das Diagramm von **Figur 6** zeigt die so erhaltenen Messkurven für die Sande der Proben 1 bis 10, wobei auf der $\gamma$-Achse die vorgegebene Flussrate F (in m$^3$/s) aufgetragen ist, und auf der x-Achse die sich in Abhängigkeit davon im Luftstrom einstellende Druckdifferenz $\Delta$P (in Pa).

Aus den Messdaten wird anhand Gleichung (1) wird die spezifische Permeabilität der Schüttung ermittelt, also der Wert kappa (= Darcy-Koeffizient).

Die in Spalte 6 von Tabelle 3 genannten kappa-Werte der SiO$_2$-Sande sind (arithmetische) Mittelwerte von jeweils drei Messungen.

Die Symbolik der qualitativen Bewertung in Tabelle 3 bedeutet dabei: "++": sehr gut, "+": gut, "0": akzeptabel, "-": schlecht und "--": sehr schlecht.

**Tabelle 1**

| Probe Nr. | Herstellung, Zusammensetzung und Morphologie | Porosität [%] | Schütt dichte [g/cm³] | $D_{10}$ [μm] | $D_{50}$ [μm] | $D_{90}$ [μm] | Kornverteilungsband [μm] | verbale Beschreibung der Größenverteilung |
|---|---|---|---|---|---|---|---|---|
| | Herstellung von SiO₂-Sanden und deren charakteristische Eigenschaften | | | | | | | |
| 1 | Quarzglaspulver - anhand Sol-Gel-Methode erzeugt, synthetisch, dicht | 45,4 | 1,20 | 187 | 292 | 396 | 90 - 315 | Eng |
| 2 | Quarzglaspulver - anhand Flammhydrolyse erzeugt, synthetisch, dicht, sphärisch | 42,7 | 1,26 | 126 | 189 | 662 | 63 - 710 | Breit |
| 3 | Sprühgranulat aus SiO₂-Soot (fumed silica), BET-Oberfläche: ~ 30 m²/g, amorph, porös, sphärisch | 64,6[*1] | 0,78 | 113 | 254 | 419 | 63 - 710 | Breit |
| 4 | Quarzkristall-Sand aus natürlich vorkommendem Rohstoff, dicht, gemahlen | 48,8 | 1,33 | 82 | 166 | 251 | 63 - 315 | Eng und fein |
| 5 | Kristalliner Quarzsand aus natürlich vorkommendem Rohstoff, andere Korngrößenverteilung als Probe 5 | 54,4 | 1,19 | 71 | 105 | 146 | 63 - 180 | Sehr eng |
| 6 | Sprühgranulat wie Probe 3 aber zusätzlich durch Heißchlorierung im Drehrohrofen gereinigt dadurch etwas geringe BET-Oberfläche um 25 m²/g | 63,4[*1] | 0,81 | 116 | 246 | 356 | 63 - 500 | Breit |
| 7 | Quarzglassand aus zerkleinertem Quarzglas aus natürlich vorkommendem Rohstoff, dicht | 43,8 | 1,24 | 173 | 1717 | 2877 | 63 - >3000 | Sehr breit und grob |
| 8 | Quarzglassand wie Probe 7, aber andere Korngrößenverteilung | 46,2 | 1,19 | 88 | 264 | 686 | <63 - 800 | Sehr breit und fein |
| 9 | Quarzkristall-Sand wie Probe 5 aber zusätzlich durch Heißchlorierung im Drehrohrofen gereinigt | 50,1 | 1,30 | 127 | 202 | 283 | 63 - 315 | Eng |
| 10 | Synthetische Quarzglaskörnung, sphärisch, dicht[*2] | 47,1 | 1,17 | 66 | 190 | 557 | <63 - >1000 | Sehr breit und fein |

**Tabelle 2**

| obe Nr. | Verunreinigungen | | | | | | | | | | | | |
|---|---|---|---|---|---|---|---|---|---|---|---|---|---|
| | Verunreinigungselemente Gew.-ppb] | | | | | | | | | | | | |
| | Li | Na | K | Mg | Ca | Fe | Cu | Cr | Mn | Ti | Al | Zr | [Fe]+[Cu]+[Cr]+[Ti] |
| 1 | 0,5 | 5,0 | 5,0 | 3,0 | 1,0 | 19,0 | 1,0 | 1,6 | 1,0 | 2,0 | 2,8 | 3,0 | 23,6 |
| 2 | 1,1 | 10,1 | 8,5 | 3,8 | 16,8 | 8,8 | 1,0 | 1,0 | 1,0 | 4,3 | 49,2 | 3,0 | 15,1 |
| 3 | 0,5 | 10,0 | 5,0 | 4,5 | 21,0 | 19,0 | 5,0 | 1,7 | 1,0 | 2,0 | 10,0 | 3,0 | 27,7 |
| 4 | 447,5 | 52,5 | 145,0 | 17,5 | 445,0 | 52,5 | 9,0 | 9,0 | 12,0 | 1.065,0 | 14.200,0 | 20,0 | 1.135,5 |
| 5 | 578,7 | 50,1 | 227,3 | 19,1 | 459,5 | 84,7 | 9,0 | 9,0 | 16,1 | 1.113,5 | 15.640,1 | 42,3 | 1.216,2 |
| 6 | 0,5 | 5,0 | 5,0 | 3,0 | 15,0 | 5,0 | 1,0 | 1,0 | 1,0 | 2,0 | 10,0 | 3,0 | 9,0 |
| 7 | 130,0 | 70,0 | 255,0 | 10,0 | 350,0 | 2.945,0 | 100,0 | 385,0 | 45,0 | 1.000,0 | 13.900,0 | 655,0 | 4.430,0 |
| 8 | 260,0 | 720,0 | 250,0 | 24,0 | 710,0 | 140,0 | 8,0 | 8,0 | 20,0 | 1.170,0 | 15.900,0 | 940,0 | 1.326,0 |
| 9 | 385,5 | 56,4 | 120,8 | 37,4 | 924,4 | 96,4 | 9,1 | 9,0 | 17,5 | 1.152,4 | 13.267,7 | 80,5 | 1.266,9 |
| 10 | 10,0 | 20,0 | 20,0 | 10,0 | 30,0 | 9.290,0 | 50,0 | 2.305,0 | 125,0 | 10,0 | 40,0 | 10,0 | 11.655,0 |

**Tabelle 3**

| Probe N r. | Sauberkeit | Sinter- und Schmelzverhalten | Stabilisierungs- und Entlüftungsfunktion | Abschirmungsfunktion | Darcy-Koeff. [$10^{-11}$ m$^2$] | Eignung |
|---|---|---|---|---|---|---|
| Auswertung im Hinblick auf die Eignung als Abschirmung beim Gasdrucksintern | | | | | | |
| 1 | ++ | + | + | + | 2,655 | ++ |
| 2 | ++ | + | + | + | 0,943 | +++ |
| 3 | ++ | 0 | 0 | + | 1,240 | 0 |
| 4 | - | - | + | - | 0,597 | - |
| 5 | - | - | + | - | 1,217 | - |
| 6 | ++ | 0 | 0 | + | 0,913 | + |
| 7 | - | + | + | - | 9,600 | - |
| 8 | - | + | + | + | 0,967 | 0 |
| 9 | - | - | + | - | 3,913 | - |
| 10 | - | - | - | + | 0,550 | - |

Gasdrucksinterprozess

Unter Einsatz der in Tabelle 1 definierten SiO$_2$-Sande wurden mehrere Gasdrucksinterprozesse durchgeführt, wobei das zu schmelzende Zwischenprodukt von einer gasdurchlässigen Schüttung aus dem jeweiligen Sand abgeschirmt worden ist.

Das in die Schüttung 7 eingebettete (Figur 1) oder von der Schüttung 7 vollständig umhüllte (Figur 2) Zwischenprodukt 5 wird zunächst langsam auf 1100 °C aufgeheizt. Während einer Vorheizphase, die das Aufheizen und die ersten drei Stunden der Haltezeit bei dieser Temperatur umfasst, wird im Sinterofen ein Vakuum (< 5 mbar) aufrechterhalten. Aus dem Zwischenprodukt 5 freigesetzte Gase können durch die Schüttung 7, 7a nach außen gelangen. Gaseinschlüsse und Blasenbildung im Zwischenprodukt werden so vermieden.

Anschließend wird die Temperatur bei Aufrechterhaltung des Unterdrucks auf 1550 °C erhöht. Dabei wird das Zwischenprodukt 5 vollständig gesintert und aufgeschmolzen und die Schüttung 7 von außen beginnend allmählich nach innen hin zu einer in Idealfall gasdichten Außenschicht verdichtet. Die Dauer dieser Schmelzphase hängt von den Sintereigenschaften der Schüttung 7 ab und beträgt in der Regel 2 Stunden, manchmal auch mehr.

Während einer anschließenden Überdruckphase wird im Innenraum 2 der Sinterform 1 eine Argon-Atmosphäre mit einem Druck von 12 bar erzeugt und die Temperatur auf 1750 °C erhöht und während einer Dauer von 1 Stunde aufrechterhalten. In dieser Phase ist das Zwischenprodukt 5 bereits thermisch weitgehend verdichtet (geschmolzen), kann aber noch Blasen enthalten. Zumindest die Außenbereiche der Schüttung 7 sind vollkommen oder zumindest weitgehend gasdicht, so dass der hohe Gasdruck zu einer weiteren Verdichtung des Zwischenprodukts 5 führt, bei der möglichst alle noch vorhandenen Blasen entfernt werden, indem darin noch enthaltene Gase in die Glasmatrix des Zwischenprodukts gepresst werden, so dass sie sich in der Glasmatrix lösen und die Blasen dadurch kollabieren. Die verdichtete ehemalige Schüttung 7 verhindert den direkten Zutritt des Druckgases zu dem Zwischenprodukt und schirmt gleichzeitig die reduzierend wirkende Innenraum-Atmosphäre von dem Zwischenprodukt 5 ab. Diese Überdruckbehandlung bei hoher Temperatur entspricht einem Heißpressen des gesinterten Zwischenprodukts 5.

Das anschließende Abkühlen des Quarzglasblocks auf eine Temperatur von 400 °C erfolgt mit einer Abkühlrate von 2 °C/min, wobei der Überdruck weiter aufrechterhalten wird. Nach dem Abkühlen auf Raumtemperatur wird der Quarzglasblock entnommen und das anhaftende Material der ehemaligen Schüttung 7 abgeschliffen.

Die Proben 1 bis 10 zeigten bei der Durchführung des Gasdrucksinterns unterschiedliche Einschmelz- und Entgasungsverhalten, das in Tabelle 3 im Hinblick auf die Abschirmungs-, Stabilisierungs- und Gas-Ausdiffusionsfunktionen qualitativ wiedergegeben ist und im Folgenden im Einzelnen näher betrachtet wird:

Probe 1: . Die Körnungs-teilchen bestehen aus dichtem Quarzglas mit enger Teilchengrößenverteilung bei vergleichsweise niedrigem D$_{90}$-Wert, was zu einer mittleren bis hohen Sinteraktivität führt. Dies führt zu einer vergleichsweise schnellen Verdichtung der Schüttung, was die anfängliche etwas zu hohe Gaspermeabilität kompensiert.

Das so erhaltene zylinderförmige Bauteil aus Seltenerdmetall-dotiertem Quarzglas dient als Vorform für die Herstellung eines Faserlasers.

Probe 2: zeigt bei breiter Korngrößenverteilung eine vergleichsweise hohe Schüttdichte und eine optimale Gaspermeabilität Auch diese Körnung ist als Abschirmungsmaterial beim erfindungsgemäßen Gasdrucksintern sehr gut geeignet.

Probe 3: hat eine leicht erhöhte Gaspermeabilität bei gleichzeitig leicht erhöhter Sinteraktivität, die sich in einem vergleichsweiseniedrigem D$_{90}$-Wert der Teilchengrößenverteilung zeigen. Die Körnung sintert früh und ist trotz hohem Darcy-Koeffizienten als Abschirmungsmaterial beim erfindungsgemäßen Gasdrucksintern bedingt geeignet.

Probe 4: zeigt infolge geringer Teilchengrößen eine hohe Schüttdichte und extrem niedrige Gaspermeabilität. Die kristalline Struktur bewirkt eine geringe Sinteraktivität und ein abruptes Aufschmelzen bei einer Temperatur von etwa 1715 °C, was zu einer abrupten Verdichtung der Schüttung führt. Dieser SiO$_2$-Sand ist als Abschirmungsmaterial beim erfindungsgemäßen Gasdrucksintern ungeeignet.

Probe 5: zeigt wie Probe 4 infolge kristalliner Struktur ein ungeeignetes Sinter- und Aufschmelzverhalten und ist als Abschirmungsmaterial beim erfindungsgemäßen Gasdrucksintern ungeeignet.

Probe 6: verhält sich ähnlich wie Probe 3, zeigt im Vergleich dazu aber eine geringere Sinteraktivität, was sich günstig auf das Einschmelz- und Sinterverhalten auswirkt. Die Körnung sintert vergleichsweise spät dicht und ist daher trotz niedrigem Darcy-Koeffizienten als Abschirmungsmaterial beim erfindungsgemäßen Gasdrucksintern geeignet. Eine mögliche Erklärung für den vergleichsweise niedrigen Darcy-Koeffizienten liegt darin, dass die

SiO$_2$-Teilchen beim Heißchlorieren verdichtet werden und eine leicht verglaste, glattere Oberfläche haben.

Probe 7: zeigt die höchste Gaspermeabilität aller SiO$_2$-Sande. Sie zeigt aber eine breite Korngrößenverteilung mit einem sehr hohen D$_{90}$-Wert, enthält also grobe Körner und große Hohlräume. Beim Gasdrucksintern kann Druckgas insbesondere über die Hohlräume der Bodenschüttung unter das Zwischenprodukt kriechen und zu großen Blasen führen, die in dem weichen Glas des Zwischenprodukts aufsteigen und das Zwischenprodukt zerstören können. Dieser Sand ist als Abschirmungsmaterial beim erfindungsgemäßen Gasdrucksintern ungeeignet.

Probe 8: zeigt ein ähnliches thermisches Verhalten (Einschmelz- und Sinterverhalten) wie Probe 2, hat jedoch einen hohen Verunreinigungsgehalt insbesondere hinsichtlich der Metalle Fe, Cu, Cr und Ti, die beim Gasdrucksintern in das Zwischenprodukt gelangen können. Daher ist dieser Sand nur bei vergleichsweise geringen Anforderungen an die Reinheit des Zwischenprodukts als Abschirmungsmaterial geeignet.

Probe 9: zeigt wie die Proben 4 und 5 infolge kristalliner Struktur ein ungeeignetes Sinter- und Aufschmelzverhalten und ist als Abschirmungsmaterial beim erfindungsgemäßen Gasdrucksintern ungeeignet.

Probe 10: zeigt eine sehr geringe Gaspermeabilität bei gleichzeitig hoher Sinteraktivität, was beides auf geringe Teilchengrößen zurückzuführen ist. Diese Körnung ist als Abschirmungsmaterial beim erfindungsgemäßen Gasdrucksintern ungeeignet.

## Patentansprüche

1. Verfahren zur Herstellung eines Bauteils, das mindestens bereichsweise aus seltenerdmetalldotiertem Quarzglas besteht, umfassend die Verfahrensschritte:

    (a) Bereitstellen eines Hohlräume enthaltenden Zwischenprodukts aus einem mit Seltenerdmetall dotierten SiO$_2$-Rohstoff,
    (b) Einbringen des Zwischenprodukts in eine Sinterform mit einem Innenraum, der von einer kohlenstoffhaltigen Formwandung begrenzt ist,
    (c) Schmelzen des Zwischenprodukts zu dem Bauteil durch Gasdrucksintern bei einer Maximal-Temperatur oberhalb von 1500 °C, wobei zwischen der Formwandung und dem Zwischenprodukt eine Abschirmung angeordnet ist,

    **dadurch gekennzeichnet, dass** als Abschirmung eine Schüttung aus amorphen SiO$_2$-Teilchen mit einer Schichtdicke von mindestens 2 mm eingesetzt wird, deren Erweichungstemperatur um mindestens 20 °C höher ist als die Erweichungstemperatur des dotierten SiO$_2$-Rohstoffs, und die zu Beginn des Schmelzens des Zwischenprodukts gemäß Verfahrensschritt gasdurchlässig ist, und die beim Schmelzen zu einer für ein Druckgas gasdichten Außenschicht sintert, und die eine Gaspermeabilität aufweist, die durch einen Darcy-Koeffizienten zwischen 0,8x10$^{-11}$ m$^2$ und 3x10$^{-11}$ m$^2$ definiert ist.

2. Verfahren nach Anspruch 1, **dadurch gekennzeichnet, dass** die Schüttung eine Schüttdichte im Bereich von 0,75 g/cm$^3$ bis 1,3 g/cm$^3$ aufweist.

3. Verfahren nach Anspruch 1 oder 2, **dadurch gekennzeichnet, dass** die SiO$_2$-Teilchen eine mittlere Teilchengröße im Bereich von 150 $\mu$m bis 300 $\mu$m aufweisen (D$_{50}$-Wert).

4. Verfahren nach einem der vorhergehenden Ansprüche, **dadurch gekennzeichnet, dass** das Gasdrucksintern gemäß Verfahrensschritt (c) bei einer Maximal-Temperatur oberhalb von 1600 °C erfolgt.

5. Verfahren nach einem der vorhergehenden Ansprüche, **dadurch gekennzeichnet, dass** die Erweichungstemperatur der SiO$_2$-Schüttung um mindestens 50 °C aber maximal 200 °C höher ist als die Erweichungstemperatur des dotierten SiO$_2$-Rohstoffs.

6. Verfahren nach einem der vorhergehenden Ansprüche, **dadurch gekennzeichnet, dass** die SiO$_2$-Teilchen eine BET-Oberfläche von weniger als 2 m$^2$/g, bevorzugt eine BET-Oberfläche von weniger als 1 m$^2$/g aufweisen, und dass sie vorzugsweise keine offene Porosität haben.

7. Verfahren nach einem der vorhergehenden Ansprüche, **dadurch gekennzeichnet, dass** die Schüttung eine Gaspermeabilität aufweist, die durch einen Darcy-Koeffizienten zwischen $0,8 \times 10^{-11}$ m$^2$ und $1,3 \times 10^{-11}$ m$^2$ definiert ist.

8. Verfahren nach einem der Ansprüche 1 bis 6, **dadurch gekennzeichnet, dass** die Schüttung eine Gaspermeabilität aufweist, die durch einen Darcy-Koeffizienten im Bereich von $1,6 \times 10^{-11}$ m$^2$ bis $3 \times 10^{-11}$ m$^2$ definiert ist, und dass die Schüttung eine Korngrößenverteilung aufweist, die durch einen $D_{10}$-Wert zwischen 150 und 250 $\mu$m und durch einen $D_{90}$-Wert zwischen 350 und 450 $\mu$m gekennzeichnet ist.

9. Verfahren nach einem der vorhergehenden Ansprüche, **dadurch gekennzeichnet, dass** die Schüttung eine anfängliche effektive Porosität im Bereich von 40 % bis 50 % aufweist.

10. Verfahren nach einem der vorhergehenden Ansprüche, **dadurch gekennzeichnet, dass** die SiO$_2$-Teilchen aus Quarzglas mit einem SiO$_2$-Gehalt von mindestens 99,9 % bestehen, dessen Viskosität bei einer Temperatur von 1200 °C mindestens $10^{12,5}$ dPa·s beträgt.

11. Verfahren nach einem der vorhergehenden Ansprüche, **dadurch gekennzeichnet, dass** die SiO$_2$-Teilchen einen Gesamtgehalt an Verunreinigungen Fe, Cu, Cr und Ti von weniger als 1000 Gew.-ppb, vorzugsweise weniger als 200 Gew.-ppb aufweisen.

12. Verfahren nach einem der vorhergehenden Ansprüche, **dadurch gekennzeichnet, dass** die gasdurchlässige Schüttung das Zwischenprodukt als Schicht mit einer mittleren Schichtdicke von mindestens 5 mm umgibt.

13. Verfahren nach einem der vorhergehenden Ansprüche, **dadurch gekennzeichnet, dass** beim Schmelzen des Zwischenprodukts die Abschirmung zu einem Hüllmaterial verglast wird, und dass nach Abschluss der Gasdrucksinter-Behandlung das Hüllmaterial entfernt wird.

14. Verfahren nach einem der vorhergehenden Ansprüche, **dadurch gekennzeichnet, dass** das Gasdrucksintern folgende Verfahrensschritte umfasst:

    (a) eine Vorbehandlung, die ein Aufheizen des Zwischenprodukts auf eine Temperatur im Bereich zwischen 1000 °C und 1300 °C unter Anlegen und Aufrechterhalten eines Unterdrucks umfasst,
    (b) ein Aufschmelzen des Zwischenprodukts bei einer Temperatur oberhalb von 1500 °C unter einem Unterdruck und einer Schmelzdauer von mindestens 30 min, wobei die Schüttung zu der gasundurchlässigen Außenschicht sintert, und
    (c) eine Druckbehandlung des geschmolzenen Zwischenprodukts bei einer Temperatur oberhalb von 1500 °C in einer Inertgas-Atmosphäre unter einem Überdruck im Bereich zwischen 2 bar und 20 bar während einer Dauer von mindestens 30 min.

15. Verfahren nach Anspruch 14, **dadurch gekennzeichnet, dass** das Zwischenprodukt zeitweise einer Atmosphäre ausgesetzt wird, die Helium und/oder Wasserstoff in einer Konzentration von mindestens 50 Vol.-% enthält.

**Claims**

1. Method for producing a component which consists at least in portions of a rare earth metal-doped quartz glass, comprising the method steps:

    (a) (a) providing an intermediate product containing voids and consisting of a SiO$_2$ raw material doped with rare earth metal,
    (b) introducing the intermediate product into a sinter mold with an interior bordered by a carbonaceous mold wall,
    (c) melting the intermediate product into the component by gas pressure sintering at a maximum temperature above 1500°C, a shield being arranged between the mold wall and the intermediate product,

    **characterized in that** a bulk material of amorphous SiO$_2$ particles with a layer thickness of at least 2 mm is used as the shield, the softening temperature thereof being at least 20°C higher than the softening temperature of the doped SiO$_2$ raw material, and the bulk material being gas-permeable at the beginning of the melting of the intermediate product according to the method step, and the bulk material sintering during melting into an outer layer that is gas-tight to a pressure gas, and the bulk material has a gas permeability which is defined by a Darcy coefficient between

$0.8 \times 10^{-11}$ m$^2$ and $3 \times 10^{-11}$ m$^2$.

2. Method according to claim 1, **characterized in that** the bulk material has a bulk density in the range of 0.75 g/cm$^3$ to 1.3 g/cm$^3$.

3. Method according to claim 1 or 2, **characterized in that** the SiO$_2$ particles have a mean particle size in the range of 150 $\mu$m to 300 $\mu$m (D$_{50}$ value).

4. Method according to any one of the preceding claims, **characterized in that** the gas pressure sintering according to method step (c) takes place at a maximum temperature above 1600°C.

5. Method according to any one of the preceding claims, **characterized in that** the softening temperature of the SiO$_2$ bulk material is higher by at least 50°C, but not more than 200°C, than the softening temperature of the doped SiO$_2$ raw material.

6. Method according to any one of the preceding claims, **characterized in that** the SiO$_2$ particles have a BET surface area of less than 2 m$^2$/g, preferably a BET surface area of less than 1 m$^2$/g, and that they preferably have no open porosity.

7. Method according to any one of the preceding claims 1 to 6, **characterized in that** the bulk material has a gas permeability which is defined by a Darcy coefficient between $0.8 \times 10^{-11}$ m$^2$ and $1.3 \times 10^{-11}$ m$^2$.

8. Method according to any one of claims 1 to 6, **characterized in that** the bulk material has a gas permeability which is defined by a Darcy coefficient in the range of $1.6 \times 10^{-11}$ m$^2$ to $3 \times 10^{-11}$ m$^2$, and that the bulk material has a grain size distribution which is **characterized by** a D$_{10}$ value between 150 and 250 $\mu$m and by a D$_{90}$ value between 350 and 450 $\mu$m.

9. Method according to any one of the preceding claims, **characterized in that** the bulk material has an initial effective porosity in the range of 40% to 50%.

10. Method according to any one of the preceding claims, **characterized in that** the SiO$_2$ particles consist of quartz glass with a SiO$_2$ content of at least 99.9%, the viscosity of which is at least $10^{12.5}$ dPa·s at a temperature of 1200°C.

11. Method according to any one of the preceding claims, **characterized in that** the SiO$_2$ particles have a total content of impurities Fe, Cu, Cr and Ti of less than 1000 wt. ppb, preferably less than 200 wt. ppb.

12. Method according to any one of the preceding claims, **characterized in that** the gas-permeable bulk material surrounds the intermediate product as a layer with a mean layer thickness of at least 5 mm.

13. Method according to any one of the preceding claims, **characterized in that** during melting of the intermediate product the shield is vitrified into a cladding material, and that after completion of the gas pressure treatment the cladding material is removed.

14. Method according to any one of the preceding claims, **characterized in that** gas pressure sintering comprises the following method steps:

   (a) a pretreatment which comprises a heating up of the intermediate product to a temperature in the range between 1000°C and 1300°C with application and maintenance of a negative pressure,
   (b) melting the intermediate product at a temperature above 1500°C at a negative pressure and for a melting period of at least 30 min, wherein the bulk material sinters into the gas-impermeable outer layer, and
   (c) a pressure treatment of the molten intermediate product at a temperature above 1500°C in an inert gas atmosphere under an overpressure in the range between 2 bar and 20 bar for a period of at least 30 min.

15. Method according to claim 14, **characterized in that** the intermediate product is temporarily exposed to an atmosphere which contains helium and/or hydrogen in a concentration of at least 50% by vol.

**Revendications**

1. Procédé de fabrication d'un composant, qui consiste au moins par endroits de verre de quartz dopé à un métal de terres rares, comprenant les étapes de procédé :

(a) de fourniture d'un produit intermédiaire contenant des espaces vides, composé d'une matière brute à base de $SiO_2$ dopée à un métal de terres rares,
(b) d'introduction du produit intermédiaire dans un moule de frittage avec un espace intérieur, qui est délimité par une paroi moulée contenant du carbone,
(c) de fusion du produit intermédiaire en le composant par frittage sous pression de gaz à une température maximale supérieure à 1500 °C, dans lequel une protection est disposée entre la paroi moulée et le produit intermédiaire,

**caractérisé en ce qu'**une matière en vrac composée de particules de $SiO_2$ amorphes avec une épaisseur de couche d'au moins 2 mm est utilisée en tant que protection, dont la température de ramollissement est plus élevée d'au moins 20 °C que la température de ramollissement de la matière première à base de $SiO_2$ dopée et qui laisse passer les gaz au début de la fusion du produit intermédiaire selon l'étape de procédé et qui est frittée lors de la fusion en une couche extérieure étanche aux gaz pour un gaz sous pression, et la matière en vrac présente une perméabilité aux gaz qui est définie par un coefficient de Darcy entre $0,8 \times 10^{-11}$ $m^2$ et $3 \times 10^{-11}$ $m^2$.

2. Procédé selon la revendication 1, **caractérisé en ce que** la matière en vrac présente une masse volumique apparente dans la plage de 0,75 $g/cm^3$ à 1,3 $g/cm^3$.

3. Procédé selon la revendication 1 ou 2, **caractérisé en ce que** les particules de $SiO_2$ présentent une taille de particules moyenne dans la plage de 150 $\mu$m à 300 $\mu$m (valeur $D_{50}$).

4. Procédé selon l'une quelconque des revendications précédentes, **caractérisé en ce que** le frittage sous pression de gaz est effectué selon l'étape de procédé (c) à une température maximale supérieure à 1600 °C.

5. Procédé selon l'une quelconque des revendications précédentes, **caractérisé en ce que** la température de ramollissement de la matière en vrac à base de $SiO_2$ est plus élevée d'au moins 50 °C toutefois au maximum de 200 °C que la température de ramollissement de la matière brute à base de $SiO_2$ dopée.

6. Procédé selon l'une quelconque des revendications précédentes, **caractérisé en ce que** les particules de $SiO_2$ présentent une surface BET inférieure à 2 $m^2/g$, de manière préférée une surface BET inférieure à 1 $m^2/g$, et qu'elles n'ont de préférence aucune porosité ouverte.

7. Procédé selon l'une quelconque des revendications précédentes, **caractérisé en ce que** la matière en vrac présente une perméabilité aux gaz, qui est définie par un coefficient de Darcy entre $0,8 \times 10^{-11}$ $m^2$ et $1,3 \times 10^{-11}$ $m^2$.

8. Procédé selon l'une quelconque des revendications 1 à 6, **caractérisé en ce que** la matière en vrac présente une perméabilité aux gaz, qui est définie par un coefficient de Darcy dans la plage de $1,6 \times 10^{-11}$ $m^2$ à $3 \times 10^{-11}$ $m^2$, et que la matière en vrac présente une répartition granulométrique, qui est **caractérisée par** une valeur $D_{10}$ entre 150 et 250 $\mu$m et par une valeur $D_{90}$ entre 350 et 450 $\mu$m.

9. Procédé selon l'une quelconque des revendications précédentes, **caractérisé en ce que** la matière en vrac présente une porosité effective initiale dans la plage de 40 % à 50 %.

10. Procédé selon l'une quelconque des revendications précédentes, **caractérisé en ce que** les particules de $SiO_2$ consistent en verre de quartz avec une teneur en $SiO_2$ d'au moins 99,9 %, dont la viscosité est d'au moins $10^{12,5}$ dPa•s à une température de 1200 °C.

11. Procédé selon l'une quelconque des revendications précédentes, **caractérisé en ce que** les particules de $SiO_2$ présentent une teneur totale en impuretés Fe, Cu, Cr et Ti inférieure à 1000 ppb en poids, de préférence inférieure à 200 ppb en poids.

12. Procédé selon l'une quelconque des revendications précédentes, **caractérisé en ce que** la matière en vrac laissant passer les gaz entoure le produit intermédiaire en tant que couche avec une épaisseur de couche moyenne d'au moins 5 mm.

13. Procédé selon l'une quelconque des revendications précédentes, **caractérisé en ce que** la protection est vitrifiée en un matériau d'enrobage lors de la fusion du produit intermédiaire, et que le matériau d'enrobage est supprimé à l'issue du traitement de frittage sous pression de gaz.

14. Procédé selon l'une quelconque des revendications précédentes, **caractérisé en ce que** le frittage sous pression de gaz comprend des étapes de procédé suivantes :

> (a) un prétraitement, qui comprend un chauffage du produit intermédiaire à une température dans la plage entre 1000 °C et 1300 °C en appliquant et en maintenant une dépression,
> (b) une fusion du produit intermédiaire à une température supérieure à 1500 °C en présence d'une dépression et pour une durée de fusion d'au moins 30 min, dans lequel la matière en vrac est frittée en la couche extérieure ne laissant pas passer les gaz, et
> (c) un traitement sous pression du produit intermédiaire fondu à une température supérieure à 1500 °C dans une atmosphère sous gaz inerte en présence d'une surpression dans la plage entre 2 bar et 20 bar pendant une durée d'au moins 30 min.

15. Procédé selon la revendication 14, **caractérisé en ce que** le produit intermédiaire est exposé par intermittence à une atmosphère, qui contient de l'hélium et/ou de l'hydrogène en une concentration d'au moins 50 % en vol.

**Fig. 1**          **Fig. 2**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004006017 A1
- DE 102006043738 A1
- DE 102007045097
- JP 2002356340 A
- GB 2331985 A
- EP 2703367 A1